# FASCICULE DE BREVET EUROPEEN

(11) **EP 0 929 959 B1**
(45) Date de publication et mention de la délivrance du brevet: **15.12.2004**
(21) Numéro de dépôt: 96933498.6
(22) Date de dépôt: 07.10.1996
(51) Int. Cl.: H04L 27/26, H04J 13/02

(54) **PROCEDE DE TRANSMISSION DE DONNEES PAR PAQUETS SUR FREQUENCE PORTEUSE LINEAIREMENT VARIABLE; EMETTEUR ET RECEPTEUR METTANT EN OEUVRE CE PROCEDE**
DATENPAKETÜBERTRAGUNGSMETHODE ÜBER EINE LINEAR VARIABLE FREQUENZ; SENDER UND EMPFÄNGER FÜR DIESE METHODE
METHOD FOR TRANSMITTING DATA PACKETS ON CARRIER FREQUENCY WITH LINEAR VARIATION; TRANSMITTER AND RECEIVER IMPLEMENTING THIS METHOD

(43) Date de publication de la demande: 21.07.1999
(73) Titulaire: Thales, 75008 Paris (FR)
(72) Inventeur: HETHUIN, Serge, Thomson-CSF S.C.P.I., F-94117 Arcueil Cédex (FR); RAMEL, Louis, Thomson-CSF S.C.P.I., F-94117 Arcueil Cédex (FR)
(74) Mandataire: Dudouit, Isabelle
(86) Numéro de dépôt international: PCT/FR1996/001562
(87) Numéro de publication internationale: WO 1998/016043

(56) Documents cités:
- EP-A- 0 655 845
- EP-A- 0 667 695
- FR-A- 2 737 366
- GB-A- 2 145 594
- GB-A- 2 271 693

## Description

La présente invention se rapporte à la transmission, en particulier dans les réseaux à large bande, de données par paquets, ces paquets comportant un en-tête à une première fréquence porteuse suivi d'un champ d'informations à une seconde fréquence porteuse, le début d'émission du champ étant lié au début d'émission de l'en-tête du paquet correspondant.

Il est connu de transmettre des données par paquets comportant chacun un en-tête suivi d'un champ d'informations, les informations apportées par l'en-tête permettant, entre autres, la reconnaissance et la prise en compte du paquet par ses destinataires, notamment de la demande de brevet EP 0 655 845.

Il est connu, disposant d'une bande de fréquences données pour l'émission de paquets dans un réseau, de définir différents canaux d'émission dans la bande et de les attribuer aux émetteurs du réseau, soit de manière prédéterminée soit en fonction des besoins d'émission ; il s'avère qu'une telle méthode ne permet pas une utilisation optimale de la bande de fréquences et est peu pratique surtout lorsqu'un récepteur est susceptible de recevoir des paquets sur n'importe lequel des canaux et doit donc surveiller l'émission de paquets sur tous les canaux.

Il est également connu d'affecter, dans la bande des fréquences d'émission d'un réseau, un canal aux en-têtes, notamment de la demande de brevet EP 0 655 845; les récepteurs n'ont plus à surveiller que ce canal et les informations fournies par les en-têtes permettent de recevoir les champs, ces derniers étant transmis dans le reste de la bande utile sur une fréquence porteuse qui peut être constante ou varier de façon prédéterminée, par exemple par sauts, pendant toute la durée du paquet. C'est dans le cadre d'une transmission du champ sur une fréquence porteuse qui varie que se situe l'invention. Le but de l'invention est d'améliorer les conditions de transmission, en particulier en ce qui concerne l'étalement du spectre, le débit, la facilité d'exploitation.

Le document EP 0 667 965 propose l'utilisation de plusieurs porteuses pour répartir des données à transmettre (chaque porteuse comportant au moins un paquet dans sa totalité) et de moduler ces porteuses par une autre fréquence porteuse (par exemple par une modulation de type CFSK). Néanmoins, les paquets transmis par cette méthode restent très sensibles aux évanouissements.

Dans ce document il est question de symboles. Il est rappelé qu'il s'agit de regroupements d'informations binaires appelées bits; ces regroupements peuvent être exprimés sous différentes formes de modulation (amplitude, fréquence, phase), chaque valeur du regroupement étant représentée par un état de la constellation dans le plan complexe. A titre d'exemple un regroupement de m=3 bits peut être exprimé à travers une modulation à N = 2^{m} = 2³ = 8 états de phase, chaque état de phase étant situé sur le cercle unité à des multiples de π/4. Et, plus particulièrement, dans le cas d'une modulation à deux états, le symbole correspond à un bit.

En utilisant, pour le champ d'informations, un signal à fréquence porteuse qui varie selon une rampe linéaire, ce but est obtenu par une modulation dudit signal non pas par une sous-porteuse mais par plusieurs sous-porteuses, ces sous-porteuses étant, elles-mêmes, modulées par les données à transmettre selon une technique de multiplexage à division de fréquence orthogonale, généralement appelée technique OFDM d'après le sigle qui, dans la littérature anglo-saxonne, signifie Orthogonal Frequency Division Multiplex. Il est à noter que, dans ce qui suit, la technique OFDM couvre aussi bien l'OFDM simple que l'OFDM codé aussi appelé technique COFDM d'après le sigle qui, dans la littérature anglo-saxonne, signifie Coded Orthogonal Frequency Division Multiplex ; il est rappelé à ce sujet que considérant un train binaire, en technique OFDM les symboles sont transmis par groupe de N symboles, avec N entier supérieur à un, respectivement sur N sous-porteuses et pendant un temps égal au temps pour recevoir les N symboles. Il est rappelé que la technique COFDM n'est qu'une variante de la technique OFDM en ce sens que l'on associe en plus, dans la technique COFDM, une fonction de codage permettant d'obtenir, à partir des N symboles d'entrée, N sorties composées chacune d'une pondération des N symboles d'entrée.

Selon l'invention il est proposé un procédé de transmission de données par paquets, ces paquets comportant un en-tête à une première fréquence porteuse suivi d'un champ d'informations à une seconde fréquence porteuse, le début d'émission du champ étant lié au début d'émission de l'en-tête du paquet correspondant, caractérisé en ce qu'il consiste, pour l'émission du champ, à utiliser N, avec N entier supérieur à 1, sous-porteuses distinctes et simultanées, à scinder les données à transmettre dans le champ en groupes successifs de N symboles, à affecter les N symboles respectivement aux N sous-porteuses par multiplexage OFDM et à moduler ces N sous-porteuses respectivement par ces N symboles afin d'obtenir un signal modulant fait des N sous-porteuses ainsi modulées, à générer un signal à la seconde fréquence porteuse variant selon une rampe linéaire dans le temps, à moduler le signal à la seconde fréquence porteuse par le signal modulant, et, à la réception, à mélanger le signal correspondant au champ d'informations à un signal en rampe semblable au signal à la seconde fréquence porteuse afin d'obtenir un signal correspondant au signal modulant et d'en extraire les données du champ d'informations.

Selon l'invention il est proposé un émetteur pour la mise en oeuvre du procédé, caractérisé en ce qu'il comporte des moyens d'élaboration de groupes de symboles représentatifs des données à transmettre dans un champ, des premiers moyens de modulation en technique OFDM pour élaborer N, avec N entier supérieur à 1, sous-porteuses modulées par les groupes afin de générer un signal modulant, un générateur de rampe pour générer un signal porteur dont la fréquence varie selon une rampe linéaire dans le temps et des seconds moyens de modulation pour recevoir les signaux générés par les premiers moyens de modulation et le générateur de rampe et effectuer une modulation.

Selon l'invention il est également proposé un récepteur pour la mise en oeuvre du procédé, caractérisé en ce qu'il comporte un mélangeur avec une première entrée pour recevoir un signal émis selon le procédé, une deuxième entrée et une sortie, un générateur de rampe pour délivrer, sur la deuxième entrée du mélangeur, un signal dont la fréquence varie linéairement dans le temps et, à la sortie du mélangeur, un opérateur fréquence-temps suivi d'un circuit de démodulation de sous-porteuses.

La présente invention sera mieux comprise et d'autres caractéristiques apparaîtront à l'aide de la description ci-après et des figures correspondantes qui représentent :
- les figures 1 à 3, des diagrammes de temps relatifs à des paquets transmis selon l'invention,
- la figure 4, le schéma d'un émetteur selon l'invention,
- la figure 5, le schéma d'un récepteur selon l'invention.

Dans les schémas les dispositifs de synchronisation précise, relevant de la technologie courante, n'ont pas été représentés en vue de rendre les dessins plus clairs et de simplifier l'exposé.

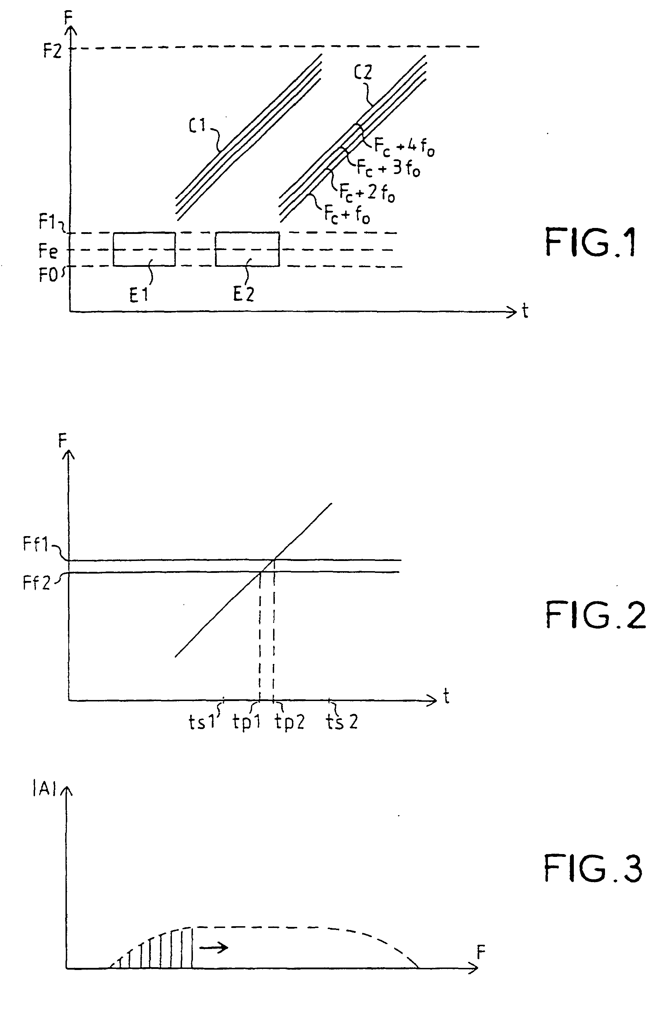

La figure 1 est un diagramme schématique montrant comment, dans le cadre de l'invention, sont transmis deux paquets successifs de données. Chaque paquet comporte un en-tête E1, E2 suivi d'un champ d'informations C1, C2.

L'en-tête est transmis sur une fréquence porteuse fixe Fe et occupe un canal de transmission dont les limites sont deux fréquences F0, F1.

Le champ d'informations est transmis simultanément sur quatre sous-porteuses qui modulent une porteuse Fc et cette porteuse a une variation en rampe, c'est-à-dire que la valeur de sa fréquence est une fonction linaire du temps t ; sur la figure 1 quatre rampes Fc+fo, Fc+2fo, Fc+3fo, Fc+4fo constituent une représentation symbolique de chacun des champs d'informations C1 et C2.

Le champ d'informations occupe ainsi un canal de fréquence de largeur constante, qui se déplace de façon continue dans le temps entre la valeur F1 et une valeur qui, pour les paquets les plus longs, est au plus égale à F2, la bande F0-F2 étant la bande de fréquences attribuée au réseau dans lequel sont échangés les paquets considérés.

Il est à noter sur les différents diagrammes de ce document les proportions entre les divers intervalles de temps et entre les divers intervalles de fréquences ne sont données qu'à titre d'exemples vu qu'elles dépendent des applications ; de plus les proportions ne sont pas respectées entre les différents diagrammes.

La transmission, dans le réseau, des données du champ d'informations se fait par groupes; la modulation utilisée sur chaque sous-porteuse peut être de différents types ; des modulations de phase à deux états dites DPSK, d'après leur sigle dans la littérature anglo-saxonne qui signifie Differential Phase-Shift Keying, sont les plus simples et les plus économiques pour la transmission de ce type de paquets ; des modulations à plus de deux états de phase, en particulier à 8 états de phase dites D8PSK, permettent d'atteindre des débits plus élevés au prix toutefois d'une moins bonne immunité au bruit. Dans le cas, par exemple, de quatre sous-porteuses pour le champ, les groupes sont de quatre symboles qui se réduisent à quatre bits dans le cas d'une modulation à deux états de phase. Ces groupes sont transmis en technique OFDM simple ou OFDM codé, c'est-à-dire COFDM, selon la façon dont il est prévu de faire fonctionner le réseau.

Ainsi le débit global est partagé entre les sous-porteuses et peut facilement être augmenté ou diminué en augmentant ou en diminuant le nombre de sous-porteuses.

A titre d'exemple il a été utilisé un ensemble de 16 sous-porteuses sur une bande de fréquences totale instantanée de 8 MHz, chaque sous-porteuse permettant de transmettre environ 250 kbaud/s soit, dans le cas d'une modulation QPSK, un débit de 500 kb/s par sous-porteuse et un débit global de 8 Mb/s. Chaque temps symbole dure donc 2µs. Avec une rampe qui dure environ 500µs pour une bande totale d'environ 250MHz la variation de fréquence entre le début et la fin d'un temps symbole est alors de 1 MHz.

La figure 2 est destinée à montrer comment, du fait de sa constitution, le champ d'informations est peu sensible aux évanouissements, plus communément appelés fading. En effet si une bande de fréquence Ff1-Ff2 est bouchée par fading sélectif, un symbole de durée ts2-ts1, émis par modulation d'une rampe de fréquences, n'est affecté par ce fading qu'au moment du passage dans la bande Ff1-Ff2 c'est-à-dire seulement pendant le temps tp2-tp1 et ce temps est inversement proportionnel à la pente de la rampe utilisée. Il apparaît ainsi que le problème de fading sélectif se ramène à un problème de fading temporel dont les effets sont alors réduits par la modulation en technique OFDM qui permet d'allonger la durée du temps symbole, à débit équivalent, par rapport à une transmission classique sur sous-porteuse unique.

Il est également à noter que, du fait de la répartition de l'énergie d'émission non pas sur une seule sous-porteuse mais sur plusieurs et du fait de la modulation par rampe linéaire de la porteuse, le spectre d'émission des champs d'informations est étalé et subit une translation correspondant à la modulation de la rampe de fréquences. Ceci est illustré par la figure 3 qui représente, à un instant donné, l'amplitude |A| des raies principales correspondant aux sous-porteuses, en fonction des fréquences d'émission ; lorsque la fréquence porteuse varie entre ses deux valeurs extrêmes, le spectre, dont l'enveloppe est figurée par une ligne courbe interrompue, subit un glissement figuré par une flèche horizontale sur la figure 3. Le cas représenté sur cette figure est celui de huit sous porteuses.

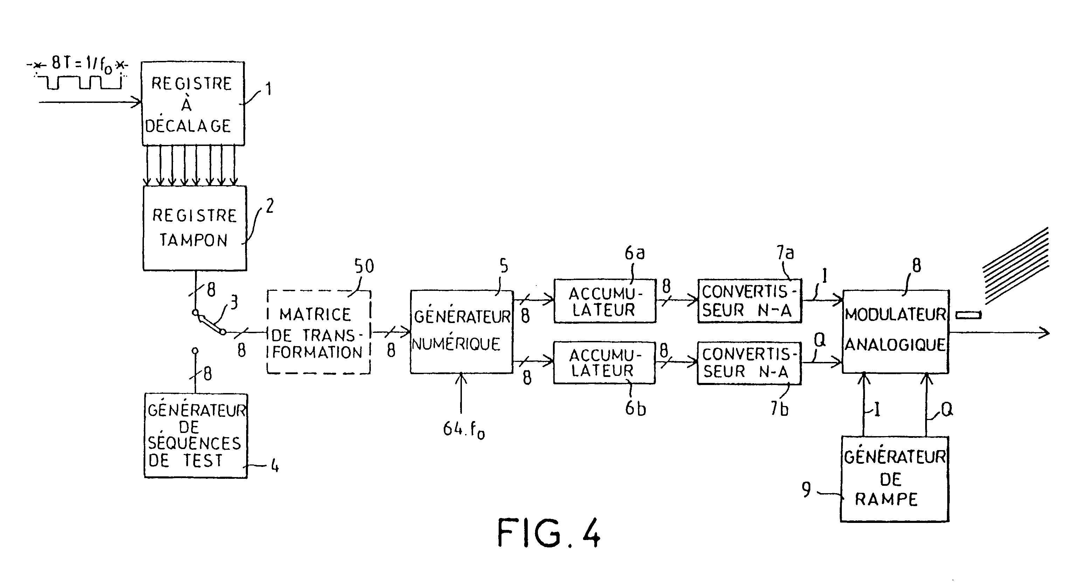

La figure 4 est le schéma d'un émetteur pour la mise en oeuvre du procédé de transmission de paquets qui vient d'être décrit à l'aide des figures 1 à 3. L'exemple décrit concerne une transmission sur huit sous - porteuses en technique COFDM ou OFDM simple; sur le schéma, un circuit 50, dessiné en traits interrompus, représente la fonction de codage qui permet de passer de la technique OFDM à la technique COFDM.

L'information à transmettre est appliquée à l'entrée d'un registre à décalage 1 dont les huit sorties sont reliées à l'entrée d'un registre tampon 2. Cette information est constituée de symboles délivrés au rythme de 8fo qui sont regroupés en groupes successifs de huit symboles chacun, grâce à l'ensemble registre à décalage-registre tampon; la durée d'un groupe est donc de 8T=8/8fo=1/fo.

Le contenu du registre 2 est appliqué sur les premières bornes d'un commutateur électronique 3 qui, s'il était réalisable en version mécanique, serait un commutateur à huit galettes et deux positions.

Dans ce qui suit il va d'abord être considéré que le commutateur 3 est directement connecté aux huit entrées d'un générateur numérique, 5, de huit sous-porteuses modulées, de fréquences respectives fo, 2fo, 3fo,...,8fo ; ces rapports entre les valeurs de fréquences sont donnés à titre d'exemple non limitatif. Dans le cas de l'exemple décrit, où il est effectué un sur-échantillonnage d'un facteur 8 de la sous-porteuse la plus rapide, le générateur 5 comporte une table trigonométrique échantillonnée à la fréquence 64.fo par écarts d'angle de 2π/64 pour la fréquence fo, de 2π.2/64 pour la fréquence 2fo, de 2π.3/64 pour la fréquence 3fo,..., de 2π.8/64 pour la fréquence 8fo. Dans l'exemple décrit chaque sous-porteuse est affectée d'un coefficient multiplicatif +1 ou -1, pour une modulation de phase à deux états, selon que le bit correspondant à la sous-porteuse considéré a la valeur 1 ou 0. L'échantillonnage s'effectue en sinus et en cosinus de façon à générer deux composantes en quadrature pour chaque sous-porteuse. Les huit composantes I et Q sont transmises, respectivement à deux accumulateurs 6a, 6b dans lesquels les huit composantes de même indice temporel sont sommées pour fournir, en sortie d'accumulateur, un nombre binaire ; dans l'exemple décrit ce nombre binaire est fait de huit bits. Les accumulateurs 6a, 6b sont respectivement reliés à deux convertisseurs numériques-analogiques 7a, 7b, travaillant au rythme de 64.fo et munis de filtres passe-bas de sortie.

Un modulateur I et Q analogique 8 reçoit sur deux premières entrées les signaux des convertisseurs 7a, 7b et sur deux secondes entrées les signaux I et Q d'un générateur de dents de scie numérique à sorties analogiques. Le modulateur 8 reçoit ainsi sur ses premières entrées deux signaux de modulation de la forme sin b, cos b et sur ses secondes entrées deux signaux porteurs de la forme sin a, cos a ; il réalise l'opération cos a.cos b - sin a sin b et fournit donc en sortie un signal de la forme cos(a+b) c'est-à-dire une porteuse modulée par huit sous-porteuses. Le signal de sortie du modulateur 8 est ensuite amplifié, dans une chaîne d'amplification linéaire non représentée, avant d'être émis.

Le commutateur 3, selon la figure 4, permet d'insérer des groupes de données de test entre les groupes de données d'information provenant du registre 2. Ces groupes de données de test ont une configuration qui est connue des récepteurs auxquels les paquets de données sont destinés ; ils permettent, de manière classique, le réglage des récepteurs afin de tenir compte, en particulier, de la réponse impulsionnelle engendrée par les divers multi-trajets du signal entre un récepteur et un émetteur.

Sur la figure 4 un rectangle a été dessiné en traits interrompus ; ce rectangle représente une matrice de transformation 50 qui est insérée entre le commutateur 3 et le générateur de sous-porteuses 5 lorsqu'il est désiré que l'émission s'effectue non pas en technique OFDM simple comme cela a été considéré avec l'émetteur tel que décrit jusqu'ici, mais en technique COFDM; la matrice 50 effectue une transformation des données binaires du groupe de données d'entrée en un ensemble de signaux de sortie avec des polynômes d'interdépendance, en vue de réduire, de façon classique, les erreurs de transmission.

Dans ce qui précède il a été considéré que les symboles des groupes représentaient des bits 0 ou 1 mais, bien entendu, ils peuvent également représenter des valeurs de constellations de modulation telles que les modulations de phase, de fréquence ou de phase, à N états ; et les symboles représentent alors des valeurs complexes en amplitude et en phase, chaque symbole pouvant s'écrire sous la forme Aₖe^{jφk} où Aₖ représente une amplitude, e le nombre d'Euler, j l'unité imaginaire, φk un angle et k désigne le symbole avec 0≤k≤N-1, si N désigne le nombre d'états de modulation.

Dans l'émetteur selon la figure 4 chaque sous-porteuse est construite temporellement, échantillon après échantillon, en tenant compte des informations binaires à transmettre ; il s'agit d'une génération directe des sous-porteuses. Une alternative classique consiste à réaliser l'émetteur de manière à élaborer le spectre théorique avec les sous-porteuses modulées et à effectuer une transformée de Fourier discrète inverse, comme la Inverse Fast Fourier Transform ou FFT⁻¹ de la littérature anglo-saxonne, de manière à générer des signaux temporels dont chacun est valable pendant la durée d'un groupe de N symboles.

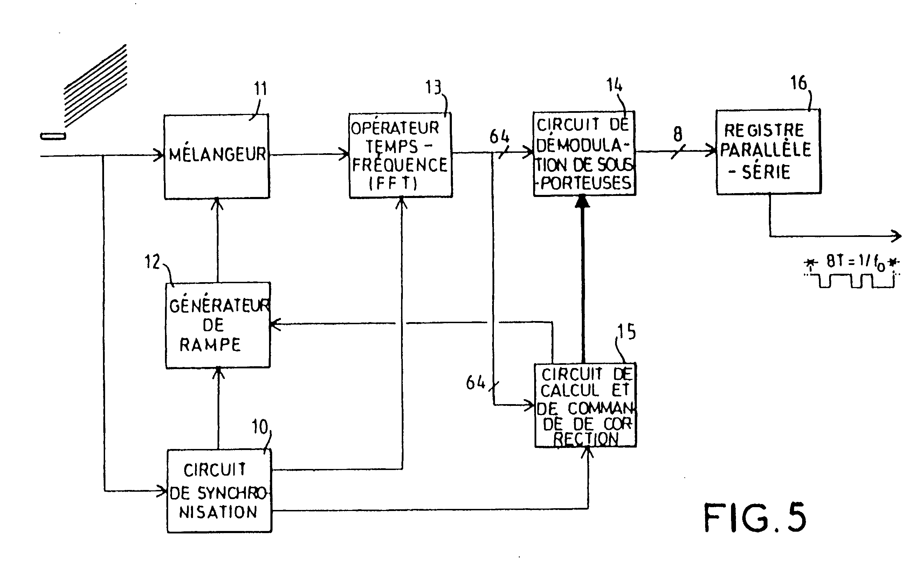

La figure 5 est le schéma d'un récepteur pour la réception de paquets émis par l'émetteur selon la figure 4.

Dans ce qui suit, pour tout ce qui est classique dans la transmission de paquets constitués d'un en-tête et d'un champ d'informations, dans la technique de discrimination d'échos et dans celle de correction d'erreurs de transmission, les explications seront données sans s'encombrer des détails de réalisation à la portée de l'homme du métier afin de mieux dégager ce qui, dans le récepteur, est propre à l'invention.

Le signal reçu par le récepteur selon la figure 5 est en permanence analysé par un circuit de synchronisation 10. Le circuit 10 comporte une horloge qui est synchronisée sur les en-têtes des paquets ; pour cela, lorsqu'un premier pic de corrélation dépasse le seuil de détection, l'analyse des pics suivants, pendant un intervalle de temps donné, de préférence un temps symbole, permet d'affiner la synchronisation de l'horloge et ainsi de donner une référence de temps précise pour la réception du champ d'informations. Lorsque cette synchronisation est acquise le signal reçu est mélangé, dans un mélangeur 11, avec le signal de sortie d'un générateur de rampe 12 qui fournit, sur une sortie unique, un signal analogique avec la même pente et les mêmes fréquences que les signaux de sortie du générateur de pente 9 de l'émetteur selon la figure 4 ; le générateur de rampe 12 est déclenché en cohérence avec le top de synchronisation obtenu dans le circuit de synchronisation 10. Le mélangeur 11 comporte un filtre de sortie pour éliminer les termes de "fréquence somme".

Un opérateur temps-fréquence 13 reçoit les signaux du mélangeur 11 ; il s'agit, dans l'exemple décrit, d'un opérateur du type transformée de Fourier, comme la Fast Fourier Transform ou FFT de la littérature anglo-saxonne. L'opérateur 13, également en cohérence avec les tops de synchronisation élaborés par le circuit de synchronisation 10, fournit, dans l'exemple décrit, un ensemble de 64 signaux d'analyse permettant d'extraire les informations portées par les huit sous-porteuses du signal de champ d'informations. Ces 64 signaux d'analyse sont fournis soit à un circuit 15 de calcul et de commande de correction de réponse impulsionnelle et d'écarts de fréquence lorsque les données transmises sont des données de test, soit à un circuit 14 de démodulation des sous-porteuses lorsque les données transmises sont des données d'information. Le circuit 15 fournit des signaux de correction de réponse impulsionnelle au circuit 14 et des signaux de correction d'offset de fréquence au générateur de rampe 12 .

Les trois paragraphes qui suivent concernent des remarques quant aux défauts susceptibles d'affecter la transmission de données dans un réseau mettant en oeuvre le procédé de transmission qui vient d'être décrit avec, à titre d'exemple, un émetteur selon la figure 4 et un récepteur selon la figure 5.

Les multi-trajets entre un émetteur et un récepteur, dans la mesure où les différences entre leurs durées respectives sont courtes par rapport à la durée d'un symbole, ne sont pas gênants du fait même de l'emploi de la technique OFDM. Il est toutefois possible d'effectuer une estimation de ces trajets multiples pour soit choisir, entre les signaux correspondant aux différents trajets, celui qui possède le plus d'énergie, soit recombiner tout ou partie des signaux relatifs aux trajets multiples afin d'accroître l'énergie du signal démodulé et améliorer ainsi la robustesse du procédé. Il s'agit ici d'effectuer une estimation de la réponse impulsionnelle du canal, les composantes étant utilisées selon leur amplitude et leur phase pour retrouver le signal d'origine ; en toute rigueur cette estimation doit être refaite tout au long de la rampe puisque la valeur de la fréquence porteuse change continuellement mais en pratique il suffit de faire cette estimation sur quelques portions régulièrement espacées de la rampe de fréquences. Pour faire cette estimation il est possible, par exemple, d'utiliser des groupes de test faites de 1 sur toutes les sous-porteuses et de déterminer, par une analyse fréquentielle du signal de sortie du mélangeur 11, la phase et l'amplitude de chacune des composantes du spectre, pour chaque sous-porteuse.

Il est également possible d'estimer et de corriger l'écart de fréquence entre l'émetteur et le récepteur ; cet écart de fréquence est dû aux dérives existant entre les oscillateurs locaux de l'émetteur et du récepteur, aux différences apportées par l'effet Doppler, aux fréquences résiduelles générées par une synchronisation imparfaite sur l'en-tête; chacune des sous-porteuses est affectée de la même dérive en fréquence. Pour déterminer cette dérive afin de pouvoir en tenir compte il est possible, par exemple, d'émettre en début de rampe ou régulièrement dans la rampe, un groupe de symboles connus tel qu'une série de 1 afin d'obtenir un ensemble de sous-porteuses pures qui facilite la détection de la dérive de fréquence à l'aide d'un analyseur de spectre.

L'invention n'est pas limitée à la description qui vient d'être faite et s'étend d'une façon plus générale à toutes les variantes à la portée de l'homme du métier en particulier en ce qui concerne les circuits pour la mise en oeuvre du procédé, les fréquences utilisées, le nombre de sous-porteuses du champ d'informations; il est entendu par ailleurs que l'en-tête peut lui aussi être transmis à l'aide non pas d'une seule mais de plusieurs sous-porteuses et que les valeurs des fréquences de ces sous-porteuses peuvent ne pas être régulièrement réparties.

## Revendications

1. Procédé de transmission de données par paquets, ces paquets comportant un en-tête à une première fréquence porteuse suivi d'un champ d'informations à une seconde fréquence porteuse, le début d'émission du champ étant lié au début d'émission de l'en-tête du paquet correspondant, **caractérisé en ce qu'**il consiste, pour l'émission du champ, à utiliser N, avec N entier supérieur à 1, sous-porteuses distinctes et simultanées, à scinder les données à transmettre dans le champ en groupes successifs de N symboles, à affecter les N symboles respectivement aux N sous-porteuses par multiplexage OFDM et à moduler ces N sous-porteuses respectivement par ces N symboles afin d'obtenir un signal modulant fait des N sous-porteuses ainsi modulées, à générer un signal à la seconde fréquence porteuse variant selon une rampe linéaire dans le temps, à moduler le signal à la seconde fréquence porteuse par le signal modulant, et, à la réception, à mélanger le signal correspondant au champ d'informations à un signal en rampe semblable au signal à la seconde fréquence porteuse afin d'obtenir un signal correspondant au signal modulant et d'en extraire les données du champ d'informations.

2. Procédé selon la revendication 1, **caractérisé en ce qu'**il consiste à effectuer la modulation par génération directe des sous-porteuses en construisant, à partir d'une table de lignes trigonométriques dont les valeurs sont multipliées par les données du groupe de symboles, des échantillons représentatifs des N sous-porteuses modulées par les données du groupe, à sommer ces échantillons de même indice temporel et à convertir du numérique en analogique les résultats de la sommation des échantillons afin d'obtenir le signal modulant.

3. Emetteur pour la mise en oeuvre d'un procédé de transmission de données par paquets, ces paquets comportant un en-tête à une première fréquence porteuse suivi d'un champ d'informations à une seconde fréquence porteuse, le début d'émission du champ étant lié au début d'émission de l'en-tête du paquet correspondant, ce procédé consistant, pour l'émission du champ, à utiliser N, avec N entier supérieur à 1, sous-porteuses distinctes et simultanées, à scinder les données à transmettre dans le champ en groupes successifs de N symboles, à affecter les N symboles respectivement aux N sous-porteuses par multiplexage OFDM et à moduler ces N sous-porteuses respectivement par ces N symboles afin d'obtenir un signal modulant fait des N sous-porteuses ainsi modulées, à générer un signal à la seconde fréquence porteuse variant selon une rampe linéaire dans le temps, à moduler le signal à la seconde fréquence porteuse par le signal modulant, et, à la réception, à mélanger le signal correspondant au champ d'informations à un signal en rampe semblable au signal à la seconde fréquence porteuse afin d'obtenir un signal correspondant au signal modulant et d'en extraire les données du champ d'informations, cet émetteur comportant des moyens d'élaboration de groupes de symboles (1, 2) représentatifs des données à transmettre dans un champ, des premiers moyens de modulation en technique OFDM (5, 6a, 6b, 7a, 7b) pour élaborer N, avec N entier supérieur à 1, sous-porteuses modulées par les groupes afin de générer un signal modulant, un générateur de rampe (9) pour générer un signal porteur dont la fréquence varie selon une rampe linéaire dans le temps et des seconds moyens de modulation (8) pour recevoir les signaux générés par les premiers moyens de modulation et le générateur de rampe et effectuer une modulation.

4. Emetteur selon la revendication 3, pour la mise en oeuvre du procédé selon les revendications 1 et 2, **caractérisé en ce que** les premiers moyens de modulation comportent en série un générateur numérique de sous-porteuses modulées (5), des moyens de sommation (6a, 6b) et des moyens de conversion du numérique en analogique (7a, 7b).

5. Récepteur pour la mise en oeuvre d'un procédé de transmission de données par paquets, ces paquets comportant un en-tête à une première fréquence porteuse suivi d'un champ d'informations à une seconde fréquence porteuse, le début d'émission du champ étant lié au début d'émission de l'en-tête du paquet correspondant, procédé consistant, pour l'émission du champ, à utiliser N, avec N entier supérieur à 1, sous-porteuses distinctes et simultanées, à scinder les données à transmettre dans le champ en groupes successifs de N symboles, à affecter les N symboles respectivement aux N sous-porteuses par multiplexage OFDM et à moduler ces N sous-porteuses respectivement par ces N symboles afin d'obtenir un signal modulant fait des N sous-porteuses ainsi modulées, à générer un signal à la seconde fréquence porteuse variant selon une rampe linéaire dans le temps, à moduler le signal à la seconde fréquence porteuse par le signal modulant, et, à la réception, à mélanger le signal correspondant au champ d'informations à un signal en rampe semblable au signal à la seconde fréquence porteuse afin d'obtenir un signal correspondant au signal modulant et d'en extraire les données du champ d'informations, ce récepteur comportant un circuit de synchronisation (10) comportant une horloge synchronisée sur les en-têtes des paquets, donnant une référence précise pour la réception des champs d'information, un mélangeur (11) avec une première entrée pour recevoir un signal émis selon le procédé ledit signal étant synchronisé par le circuit de synchronisation (10), une deuxième entrée et une sortie, un générateur de rampe (12) pour délivrer, sur la deuxième entrée du mélangeur, un signal dont la fréquence varie linéairement dans le temps et semblable au signal à la seconde porteuse et, à la sortie du mélangeur, un opérateur fréquence-temps (13) suivi d'un circuit de démodulation de sous-porteuses (14).

## Patentansprüche

1. Verfahren zur paketweisen Datenübertragung, wobei diese Pakete einen Vorspann auf einer ersten Trägerfrequenz gefolgt von einem Informationsfeld auf einer zweiten Trägerfrequenz aufweisen, wobei der Sendeanfang des Felds mit dem Sendeanfang des Vorspanns des entsprechenden Pakets verbunden ist, **dadurch gekennzeichnet, dass** es darin besteht, für das Senden des Felds N unterschiedliche und gleichzeitige Unterträger zu verwenden, wobei N eine ganze Zahl größer als 1 ist, die im Feld zu übertragenden Daten in aufeinanderfolgende Gruppen von N Symbolen aufzuspalten, die N Symbole den N Unterträgern durch OFDM-Multiplexierung zuzuteilen und diese N Unterträger mit je einem dieser N Symbole zu modulieren, um ein modulierendes Signal zu erhalten, das aus den so modulierten N Unterträgern besteht, ein Signal auf der zweiten Trägerfrequenz zu erzeugen, das gemäß einer zeitlich linearen Rampe variiert, das Signal auf der zweiten Trägerfrequenz mit dem modulierenden Signal zu modulieren und auf der Empfangsseite das dem Informationsfeld entsprechende Signal mit einem Rampensignal zu mischen, das dem Signal auf der zweiten Trägerfrequenz gleicht, um ein dem modulierenden Signal entsprechendes Signal zu erhalten und daraus die Daten des Informationsfelds zu entnehmen.

2. Verfahren nach Anspruch 1, **dadurch gekennzeichnet, dass** es darin besteht, die Modulation durch direkte Erzeugung der Unterträger durchzuführen, indem ausgehend von einer Tabelle von trigonometrischen Linien, deren Werte mit den Daten der Gruppe von Symbolen multipliziert werden, Tastproben konstruiert werden, die für die mit den Daten der Gruppe modulierten N Unterträger repräsentativ sind, diese Tastproben mit gleichem Zeitindex zu addieren und die Ergebnisse der Addition der Tastproben von digital nach analog umzuwandeln, um das modulierende Signal zu erhalten.

3. Sender zur Anwendung eines Verfahrens zur paketweisen Datenübertragung, wobei diese Pakete einen Vorspann auf einer ersten Trägerfrequenz gefolgt von einem Informationsfeld auf einer zweiten Trägerfrequenz aufweisen, wobei der Sendeanfang des Felds mit dem Sendeanfang des Vorspanns des entsprechenden Pakets verbunden ist, wobei dieses Verfahren darin besteht, für das Senden des Felds N unterschiedliche und gleichzeitige Unterträger zu verwenden, wobei N eine ganze Zahl größer als 1 ist, die im Feld zu übertragenden Daten in aufeinanderfolgende Gruppen von N Symbolen aufzuspalten, die N Symbole den N Unterträgern durch OFDM-Multiplexierung zuzuteilen und diese N Unterträger mit je einem dieser N Symbole zu modulieren, um ein modulierendes Signal zu erhalten, das aus den so modulierten N Unterträgern besteht, ein Signal auf der zweiten Trägerfrequenz zu erzeugen, das gemäß einer zeitlich linearen Rampe variiert, das Signal auf der zweiten Trägerfrequenz mit dem modulierenden Signal zu modulieren und auf der Empfangsseite das dem Informationsfeld entsprechende Signal mit einem Rampensignal zu mischen, das dem Signal auf der zweiten Trägerfrequenz gleicht, um ein dem modulierenden Signal entsprechendes Signal zu erhalten und daraus die Daten des Informationsfelds zu entnehmen, wobei dieser Sender Mittel zur Erarbeitung von Symbolgruppen (1, 2), die für die in ein Feld zu übertragenden Daten repräsentativ sind, erste Mittel zur Modulation gemäß der OFDM-Technik (5, 6a, 6b, 7a, 7b) zur Erarbeitung von N mit den Gruppen modulierten Unterträgern, mit N einer ganzen Zahl größer als 1, um ein modulierendes Signal zu erzeugen, einen Rampengenerator (9), um ein Trägersignal zu erzeugen, dessen Frequenz gemäß einer zeitlich linearen Rampe variiert, und zweite Modulationsmittel (8) aufweist, um die von den ersten Modulationsmitteln und dem Rampengenerator erzeugten Signale zu empfangen und eine Modulation durchzuführen.

4. Sender nach Anspruch 3 zur Anwendung des Verfahrens nach den Ansprüchen 1 und 2, **dadurch gekennzeichnet, dass** die ersten Modulationsmittel in Reihe einen digitalen Generator zur Erzeugung von modulierten Unterträgern (5), Additionsmittel (6a, 6b) und Mittel zur Digital-Analog-Umwandlung (7a, 7b) aufweisen.

5. Empfänger zur Anwendung eines Verfahrens zur paketweisen Datenübertragung, wobei diese Pakete einen Vorspann auf einer ersten Trägerfrequenz gefolgt von einem Informationsfeld auf einer zweiten Trägerfrequenz aufweisen, wobei der Sendeanfang des Felds mit dem Sendeanfang des Vorspanns des entsprechenden Pakets verbunden ist, wobei das Verfahren darin besteht, für das Senden des Felds N unterschiedliche und gleichzeitige Unterträger zu verwenden, wobei N eine ganze Zahl größer als 1 ist, die im Feld zu übertragenden Daten in aufeinanderfolgende Gruppen von N Symbolen aufzuspalten, die N Symbole den N Unterträgern durch OFDM-Multiplexierung zuzuteilen und diese N Unterträger mit je einem dieser N Symbole zu modulieren, um ein modulierendes Signal zu erhalten, das aus den so modulierten N Unterträgern besteht, ein Signal auf der zweiten Trägerfrequenz zu erzeugen, das gemäß einer zeitlich linearen Rampe variiert, das Signal auf der zweiten Trägerfrequenz mit dem modulierenden Signal zu modulieren und auf der Empfangsseite das dem Informationsfeld entsprechende Signal mit einem Rampensignal zu mischen, das dem Signal auf der zweiten Trägerfrequenz gleicht, um ein dem modulierenden Signal entsprechendes Signal zu erhalten, und daraus die Daten des Informationsfelds zu entnehmen, wobei dieser Empfänger eine Synchronisationsschaltung (10), die einen auf die Vorspanne der Pakete synchronisierten Taktgeber besitzt und einen genauen Bezug für den Empfang der Informationsfelder angibt, eine Mischstufe (11) mit einem ersten Eingang, um ein gemäß dem Verfahren gesendetes Signal zu empfangen, wobei das Signal von der Synchronisationsschaltung (10) synchronisiert wird, einem zweiten Eingang und einem Ausgang, einen Rampengenerator (12), um am zweiten Eingang der Mischstufe ein Signal zu liefern, dessen Frequenz zeitlich linear variiert und das dem Signal der zweiten Trägerfrequenz ähnelt, und am Ausgang der Mischstufe einen Frequenz-Zeit-Operator (13) gefolgt von einer Demodulationsschaltung (14) für Unterträger aufweist.

## Claims

1. Process for transmitting data in packets, these packets comprising a header at a first carrier frequency, followed by an information field at a second carrier frequency, the start of transmission of the field being tied to the start of transmission of the header of the corresponding packet, **characterized in that** it consists, for the transmission of the field, in using N, with N an integer greater than 1, distinct and simultaneous subcarriers, in splitting the data to be transmitted in the field into successive groups of N symbols, in assigning the N symbols respectively to the N subcarriers by OFDM multiplexing and in modulating these N subcarriers respectively by these N symbols so as to obtain a modulating signal made of the N subcarriers thus modulated, in generating a signal at the second carrier frequency varying over time according to a linear ramp, in modulating the signal at the second carrier frequency by the modulating signal, and, on reception, in mixing the signal corresponding to the information field with a ramp-like signal similar to the signal at the second carrier frequency so as to obtain a signal corresponding to the modulating signal and to extract therefrom the data of the information field.

2. Process according to Claim 1, **characterized in that** it consists in performing the modulation through direct generation of the subcarriers by constructing, from a table of trigonometric lines whose values are multiplied by the data of the group of symbols, samples representative of the N subcarriers modulated by the data of the group, in summing these samples of like temporal index and in converting the results of the summation of the samples from digital to analog so as to obtain the modulating signal.

3. Transmitter for the implementation of a process for transmitting data in packets, these packets comprising a header at a first carrier frequency, followed by an information field at a second carrier frequency, the start of transmission of the field being tied to the start of transmission of the header of the corresponding packet, this process consisting, for the transmission of the field, in using N, with N an integer greater than 1, distinct and simultaneous subcarriers, in splitting the data to be transmitted in the field into successive groups of N symbols, in assigning the N symbols respectively to the N subcarriers by OFDM multiplexing and in modulating these N subcarriers respectively by these N symbols so as to obtain a modulating signal made of the N subcarriers thus modulated, in generating a signal at the second carrier frequency varying over time according to a linear ramp, in modulating the signal at the second carrier frequency by the modulating signal, and, on reception, in mixing the signal corresponding to the information field with a ramp-like signal similar to the signal at the second carrier frequency so as to obtain a signal corresponding to the modulating signal and to extract therefrom the data of the information field, this transmitter comprising means for computing groups of symbols (1, 2) representative of the data to be transmitted in a field, first means of modulation by the OFDM technique (5, 6a, 6b, 7a, 7b) for computing N, with N an integer greater than 1, subcarriers modulated by the groups so as to generate a modulating signal, a ramp generator (9) for generating a carrier signal whose frequency varies over time according to a linear ramp and second means of modulation (8) for receiving the signals generated by the first means of modulation and the ramp generator and for performing a modulation.

4. Transmitter according to Claim 3, for implementing the process according to Claims 1 and 2, **characterized in that** the first means of modulation comprise in series a digital generator of modulated subcarriers (5), means of summation (6a, 6b) and means of digital to analog conversion (7a, 7b).

5. Receiver for the implementation of a process for transmitting data in packets, these packets comprising a header at a first carrier frequency, followed by an information field at a second carrier frequency, the start of transmission of the field being tied to the start of transmission of the header of the corresponding packet, this process consisting, for the transmission of the field, in using N, with N an integer greater than 1, distinct and simultaneous subcarriers, in splitting the data to be transmitted in the field into successive groups of N symbols, in assigning the N symbols respectively to the N subcarriers by OFDM multiplexing and in modulating these N subcarriers respectively by these N symbols so as to obtain a modulating signal made of the N subcarriers thus modulated, in generating a signal at the second carrier frequency varying over time according to a linear ramp, in modulating the signal at the second carrier frequency by the modulating signal, and, on reception, in mixing the signal corresponding to the information field with a ramp-like signal similar to the signal at the second carrier frequency so as to obtain a signal corresponding to the modulating signal and to extract therefrom the data of the information field, this receiver comprising a synchronization circuit (10) comprising a clock synchronized with the headers of the packets giving a precise reference for the reception of the information fields, a mixer (11) with a first input for receiving a signal transmitted according to the process, the said signal being synchronized by the synchronization circuit (10), a second input and an output, a ramp generator (12) for delivering, on the second input of the mixer, a signal whose frequency varies linearly over time and similar to the signal at the second carrier and, at the output of the mixer, a frequency/time operator (13) followed by a subcarrier demodulation circuit (14).
